# EUROPEAN PATENT APPLICATION

(11) **EP 4 059 885 A1**
(43) Date of publication of application: **21.09.2022**
(21) Application number: 21162868.0
(22) Date of filing: 16.03.2021
(51) Int. Cl.: C01B 25/37, H01M 4/58

(54) **PROCESS FOR PREPARING A TRANSITION METAL PHOSPHATE**

(71) Applicant: Studiengesellschaft Kohle mbH, 45470 Mülheim (DE)
(72) Inventor: SCHMIDT, Wolfgang, 45470 Mülheim an der Ruhr (DE); STEGMANN, Niklas, 45128 Essen (DE)

(57) **Abstract**

The present invention is directed to a process for preparing a transition metal phosphate comprising mixing a transition metal oxide with a hypophosphite compound and heating the mixture under inert gas conditions.

## Description

The present invention is directed to a process for preparing a transition metal phosphate and a transition metal phosphate obtained therefrom.

Synthesis and development of novel functional materials is a key for overcoming technological challenges in modern society. In that aspect, metal phosphates belong to the major classes of functional materials.

The number of compounds belonging to the class of transition metal phosphates (TMPs) is constantly growing since decades due to persistent interests in their use as functional materials. Extensively investigated and applied in research and industry, TMP materials contribute to numerous present and future key technologies.

Based on unique structural features, TMPs play an important role for clean and efficient power generation and energy storage in the 21st century. Rechargeable lithium-ion batteries apply TMPs as cathode materials. Especially lithium iron phosphate (LiFePO₄) is commercially utilized, combining high power capability and reversibility with environmental sustainability and low costs. In next generation fuel cell technology, metal pyrophosphates (MP₂O₇, M = Ti, Zr,...) serve as proton conducting membrane materials, due to numerous structure-based proton bonding sites and transport pathways.

In line with their high density of Bronsted acid sites, proton conducting TMPs are also serving as effective ion-exchangers.

In the context of heterogeneous catalysis, TMPs are widely used materials for thermo-and photocatalytic applications due to their unique combination of redox and/or acidic properties.

Among the class of TMP catalysts, vanadyl pyrophosphate (VO(P₂O₇)) is a prominent example, representing one of the most extensively studied catalysts in chemistry and the only commercially applied material for the conversion of butane to maleic anhydride.

The wide range of applications is complemented by the field of nonlinear optics (NLO) where TMP materials are prepared via crystallization from high-temperature melts of phosphate salts and used for the production of coherent deep-UV light with wavelengths below 200 nm.

Synthetic phosphate salts are known for most transition metals. Considering the number of metal cations and the structural variety of condensed phosphate units, the sheer quantity of different phases is quite large. The variety of compounds formed by the class of TMP materials is primarily limited by the intrinsic chemical nature of the elementary ionic building units.

However, it can be also limited by the availability of precursors and preparation methods. Versatile basic preparation methods, such as hydrothermal procedures, molten salt processes, or simple precipitation, are established for the synthesis of highly crystalline bulk TMPs. Application of TMPs as functional materials often requires quite sophisticated preparation methods though. Structure directing techniques are necessary to optimize the performance of the materials, porosity is generated via nanocasting strategies, thin films are formed via gas phase deposition and nanoparticles are synthesized by electrochemical approaches. Known are methods, wherein phosphate-based precursors are used.

The problem to be solved can be seen in providing an simplified method for preparing TMPs, in particular in providing a method that overcomes the disadvantages of the prior art and that does not need phosphate-based precursors and allows for moderate reaction temperature.

It was found that in contrast to conventional syntheses, a hypophosphite compound can be used to act as precursor for TMP in combination with metal oxides.

The problem is solved by a process for preparing a transition metal phosphate comprising
a) preparing a mixture of a particulate transition metal oxide with a at least stoichiometric amount of a particulate hypophosphite compound
b) heating the mixture obtained in step a), preferably under inert gas conditions, to a temperature range between the melting point and the decomposition temperature of the hypophosphite

This process presents a novel synthesis pathway for inorganic transition metal phosphates (TMPs). The method is facile and adaptable for syntheses of known and novel TMPs (e.g. Ti, V, Cr, Mn, Fe), and particularly suitable for syntheses of TMPs with low oxidation states. Common metal oxides and hypophosphite compounds are acting as TMP precursors under moderate conditions. Key feature of the new route is the reducing character of the hypophosphite compound, which enables to direct the oxidation state of the transition metal. Novel and known low-valent TMPs are easily accessible under these reductive conditions, which are not achievable by conventional approaches. According to the state of art, low oxidation states of TMPs are generally reported to be accessible by using metal powders or low-valent metal compounds as precursors. In comparison, the new process offers the possibility to direct the oxidation state of the transition metal via the hypophosphite, which results in quite moderate reaction conditions.

The hypophosphite compound may be selected from an ammonium hypophosphite, alkali hypophosphite, earth alkaline hypophosphite, transition metal hypophosphite, hypophosphorous acid and its organic ester derivatives, or mixtures thereof and serves as phosphate precursor whereby the metal oxide provides the transition metal cation under reductive conditions. Due to the reducing character of the hypophosphite compound, the transition metal gets reduced during the TMP formation. The method according the invention is thus a simple and versatile approach, which can be used for the synthesis of known and novel first row transition metal phosphates, in particular first row transition metal phosphates, with low oxidation states at moderate temperatures.

In a proposed redox reaction mechanism, the precursor compounds can be considered as oxygen donor and acceptor pairs. While the hypophosphite acts as oxygen acceptor to form stable phosphate compounds, the metal oxide donates oxygen atoms under reductive conditions. Therefore the novel method might be regarded as a kind of reductive phosphatization of transition metal oxides.

The transition metal oxide used in the process of the present invention is preferably a powder.

In a preferred embodiment, the transition metal oxide is a first-row transition metal oxide or another early transition metal oxides. TiO₂, V₂O₅, Cr₂O₃, MnO₂ or Fe₂O₃ can, for example, be used as transition metal oxide in step a) or alternatively another early transition metal oxides, exemplarily selected from MoO₃, WO₃, CeO₂.

In a preferred embodiment, the heating of step b) is carried out at least up to a temperature at which the hypophosphite compound melts. Thus, the molten hypophosphite compound serves concurrently as reaction medium. The process window of the method is determined by the temperature and time between the melting point and the thermal decomposition of the hypophosphite compound. The hypophosphite melt mediates the reaction with the dispersed or dissolved metal oxides. Due to the thermodynamic instability of the hypophosphite anion, the disproportionation into phosphane gas and phosphates limits the reaction. The phosphane acts mainly as spectators under the reaction conditions.

Preferably, the heating of step b) is carried out up to a temperature at which the melt solidifies.

In one embodiment, the heating step b) is carried out up to a temperature in the range between 200 °C and 600 °C. In an embodiment, the heating is kept at the temperature for 30 to 600 minutes, preferably for 90 to 250 minutes. A process, in which the heating step b) is carried out at gradually increasing temperature, preferably in the range between 1°C/min and 20°C/min, is preferred.

As hypophosphite compound, ammonium hypophosphite is preferably used. The ratio of the weight amount of the hypophosphite compound to the weight amount of the transition metal oxide is in the range of 2:1 to 10:1, preferably 5:1 to 10:1. The formation of a melt by using an excess of hypophosphite is beneficial for a complete conversion of the metal oxide and a high crystallinity of the product. Provided that sufficient hypophosphite is available, all oxygen of the metal oxide will be consumed and the reduced cations are free to form crystalline TMP phases.

Syntheses of TMPs with increasing weight ratios of hypophosphite compound result in different phase compositions. Lower ratios of the hypophosphite compound (1/1 - 1/2) may not be sufficient to convert the metal oxide quantitatively. However, also these conditions cause partial reduction and the formation of stable reduced metal oxide species on the surfaces of the initial metal oxide particles. Unknown intermediate phases can be formed by increasing hypophosphite ratios (1/3 - 1/5) before a phase pure TMP with a lower oxidation state is yielded from the melt (ratio ≥ 1/6).

The inert gas conditions are preferably achieved by an inert gas flow, such as nitrogen or argon, or vacuum in the reaction chamber.

The melt including the TMPs can be cooled down and excess phosphate compounds, formed on the crystal surfaces, can easily be removed by washing with water to yield the pure TMP. Formation of metal phosphides via reaction of phosphane and metal oxides was not observed under the reaction conditions. The process according to the invention can further comprise
- cooling down the product, and/or
- purifying the product and/or
- drying the product, preferably in air.

The purification step removes admixtures and is performed preferably by washing with a solvent which may be de-ionized water or a polar organic solvent or a mixture thereof. Alternatively, washing with acidic solutions, such as aqueous phosphoric acid, or sublimation of by-phases are feasible purification methods.

The invention is further directed to a transition metal phosphate obtained from the process according to the invention. The invention is preferably directed to a titanium(III) phosphate compound obtained from the process according to the invention, wherein TiO₂ is used as transition metal oxide and wherein the heating is carried out up to a temperature of less than 500°C, preferably to a temperature in the range between 250 °C and 350 °C.

The present invention is further illustrated by the attached Figures and the Experimental part. As shown in the Figures:
Fig. 1 illustrates the general synthesis procedure for the preparation of TMPs, starting from a solid mixture of ammonium hypophosphite and metal oxide.
Fig: 2 shows the XRD patterns of two novel titanium phosphate phases (a) Ti(III)P, b) Ti(IV)P) and c) Ti(PO₃)₃ synthesized by the conversion of d) TiO₂ (P25) in a melt of ammonium hypophosphite. Lines indicate the positions of the main reflections of the TiO₂ compound.
Fig. 3 shows a Raman spectrum of Ti(III)p, which reveals a strong signal (764 cm⁻¹) in a range (box) characteristic for inorganic pyrophosphate compounds.
Fig. 4 shows TG-DSC curves of the Ti(III)p → Ti(IV)p phase transformation.
Fig. 5 shows TG curve of Ti(III)p → Ti(IV)p phase transformation and associated mass signals of hydrogen (m/z 2), ammonia (m/z 17) and water (m/z 17, 18). The mass signals have been recorded from mass spectra of the exhaust gas of the TG/DSC instrument.
Fig. 6 shows a ³¹P MAS NMR spectra of Ti(IV)p prepared via phase transformation from the Ti(III)p compound phase. The Ti(III)p samples were prepared at different batches of 1 g, 5 g and 10 g.
Fig. 7 shows the XRD patterns of phases obtained with increasing hypophosphite weight ratios from 1/1 up to 1/10. The vertical lines indicate the positions of the main reflections of the TiO₂ compound.
Fig. 8 shows the XPS spectra of a) Ti(III)p, b) Ti(PO₃)₃, c) Ti(IV)p and d) phosphated Ti(III/IV) oxide synthesized from a mixture of TiO₂ and NH₄H₂PO₂ with a weight ratio of 1/2.
Fig. 9 shows the reaction pathways for the preparation of novel and known titanium phosphate phases starting from TiO₂ converted in a melt of ammonium hypophosphite.
Fig. 10 shows XRD patterns of TMPs synthesized by reductive phosphatization of metal oxides in a melt of ammonium hypophosphite: a) V(PO₃)₃ (obtained at 500 °C), b) Mn₂(P₄O₁₂) (obtained at 500 °C), c) Cr(NH₄)HP₃O₁₀ (obtained at 300 °C) (additional reflections belonging to the Cr₂O₃ compound phase (lines), d) Cr(PO₃)₃ (obtained at 500 °C), e) Fe(II)p (obtained at 300 °), f) Fe₂(P₄O₁₂) (obtained at 500 °C).
Fig: 11 shows the ⁵⁷Fe Mössbauer spectrum of Fe(II)p recorded at 80 K showing two Mössbauer sites with isomer shifts characteristic for Fe(II) species.

### Experimental part

### Characterization methods

### Powder X-ray diffraction (XRD)

XRD patterns were measured on Stoe STADI P (Debye-Scherrer) transmission and STADI P reflection (Bragg-Brentano) geometry using 0.5 mm borosilicate capillaries for transmission measurements. The transmission diffractometer was equipped with a primary germanium monochromator, the reflection instrument was equipped with an energy-dispersive PIN diode detector. Both instruments were operated with Cu K_{α} radiation.

### Raman spectrometry

The Raman data was recorded on an InVia spectroscope (Renishaw Ltd, UK) with an excitation wavelength of 785 nm; the laser power was tuned to 30mW. A 1200 grating/mm grid assured a spectra resolution of 1 cm⁻¹. All spectra were collected with 10 s per step and three repetitions.

### Thermogravimetric analysis and mass spectrometry

TG/DSC measurements have been performed with a Netzsch STA 449 thermobalance attached to a Netzsch Aeolos mass spectrometer. Measurements have been performed under argon atmosphere using a heating rate of 10°C/min.

### X-ray photoelectron spectroscopy

XPS measurements were performed with a spectrometer from SPECS GmbH equipped with a PHOIBOS 150 1D-DLD hemispherical energy analyser. The monochromatized Al K_{α} X-ray source (E=1486.6 eV) was operated at 15 kV and 200W. For measuring high-resolution scans, the pass energy was set to 20 eV. The medium area mode was used as lens mode. The base pressure during the experiment in the analysis chamber was 5x10⁻¹⁰ mbar. To account charging effects, all spectra are referred to C 1s at 284.5 eV.

### MAS NMR spectroscopy

The ³¹P MAS NMR spectra were recorded on a Bruker Avance III HD 500WB spectrometer using a double-bearing MAS probe (DVT BL4) at a resonance frequency of 202.5 MHz. The spectra were measured by applying single π/2-pulses (3.0 µs) with a recycle delay of 600 s (4 or 8 scans) at several spinning rates between 3 and 12°kHz. High-power proton decoupling (spinal64) was applied. The chemical shifts are given with respect to 85% aqueous H₃PO₄ using solid NH₄H₂PO₄ as secondary reference (δ = 0.81 ppm).

### Mossbauer spectroscopy

Mössbauer spectra were recorded on a conventional spectrometer with alternating constant acceleration of the γ-source. The minimum experimental line width of the instrument was 0.24 mm/s (full width at half-height). The sample temperature was maintained constant in an Oxford Instruments Variox cryostat, whereas the ⁵⁷Co/Rh source (0.9 GBq) was kept at room temperature. The detector was a Si-Drift diode (150 mm² SDD CUBE) of an AXAS-M1 system from Ketek GmbH. The spectrometer was calibrated by recording the Mössbauer spectrum of 25 µm alpha-Fe foil at room temperature. As the center of the six-line pattern was taken as zero velocity, isomer shifts are quoted relative to iron metal at 300K. The zero-field spectra were simulated with Lorentzians by using the program *mf.SL* (by EB).

### General synthetic procedure

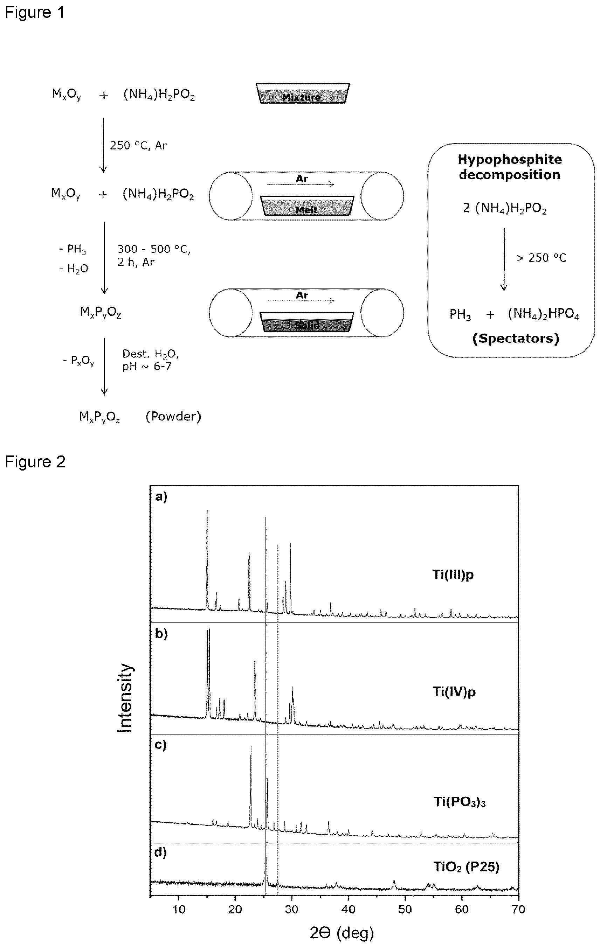

The general synthetic procedure of TMPs is illustrated in Figure 1. In a typical preparation, metal oxide powder (e.g. TiO₂, V₂O5, Cr₂O₃, MnO₂, Fe₂O₃) is mixed with a surplus of ammonium hypophosphite (NH₄H₂PO₂) with weight ratios up to 1/10 (1 part metal oxide powder, 10 parts ammonium hypophosphite) and heated for 2 h in a tube furnace under argon flow. Finally, the sample is cooled down and washed with de-ionized water until pH 6 is achieved for removing excess phosphates from the crystalline material.

The process of the present invention was tested for a series of first row transition metals (Ti, V, Cr, Mn, Fe) under low (300 °C) and high (500 °C) temperature conditions. The results, listed in Table 1, indicate that low temperature conditions tend to form ammonium TMPs, while higher temperatures lead to the formation of ammonium-free TMPs with condensed metaphosphate structures. In almost all cases, the reaction was accompanied by a reduction of the transition metal.

**Table1: TMP product phases and oxidation states for the conversion of first row transition metal oxides with ammonium hypophosphite at 300 °C and 500 °C.**

| **Compound** | | **Product (300** °C) | | **Product (500** °C) | |
|---|---|---|---|---|---|
| **TM oxide** | **Valence** | **TMP** | **Valence** | **TMP** | **Valence** |
| TiO₂ | 4+ | Ti(III)p | 3+ | Ti(PO₃)₃ | 3+ |
| V₂O₅ | 5+ | V(PO₃)₃ | 3+ | V(PO₃)₃ | 3+ |
| Cr₂O₃ | 3+ | Cr(NH₄)HP₃O₁₀ | 3+ | Cr(PO₃)₃ | 3+ |
| MnO₂ | 4+ | - | - | Mn₂(P₄O₁₂) | 2+ |
| Fe₂O₃ | 3+ | Fe(II)p | 2+ | Fe₂(P₄O₁₂) | 2+ |

In a typical reaction, the metal oxide powder (e.g. TiO₂, V₂O₅, Cr₂O₃, MnO₂ or Fe₂O₃) is mixed with a surplus of hypophosphite (NH₄H₂PO₂) and heated briefly in a tube furnace under inert gas flow. Then the melt is cooled down and washed with water to yield the pure TMPs. The process window of the method is determined by the temperature and time between the melting point and the thermal decomposition of the hypophosphite compound. Therefore, the heating rate of the process is of significant importance. The hypophosphite melt mediates the reaction with the dispersed or dissolved metal oxides. Due to the thermodynamic instability of the hypophosphite anion, the disproportionation into phosphane gas and phosphates limits the reaction. The phosphane acts as spectators under the presented reaction conditions. Excess phosphate compounds, formed on the crystal surfaces, can easily be removed by washing with water. Formation of metal phosphides via reaction of phosphane and metal oxides, as often described in the prior art, was not observed under the reaction conditions used here.

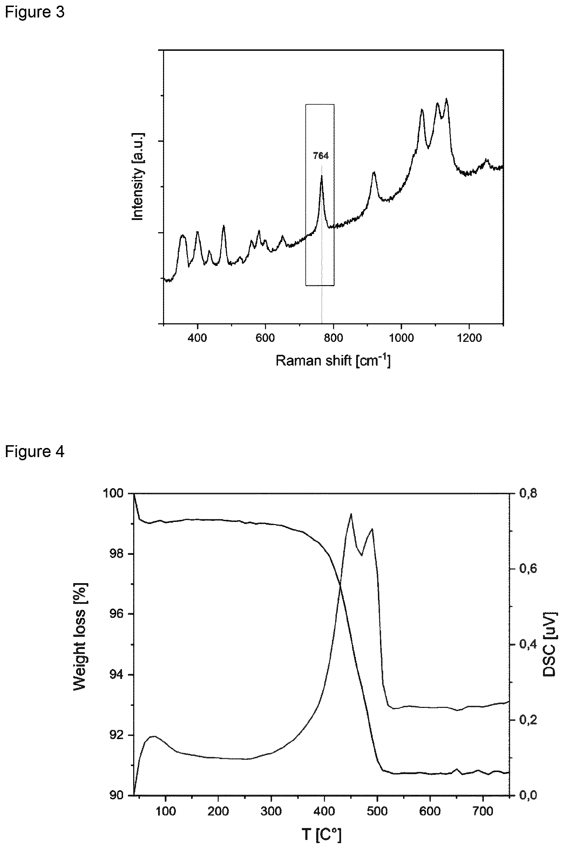

A representative example is the reaction of titanium(IV) oxide (P25) and ammonium hypophosphite, resulting in novel and known crystalline titanium(III) phosphate compounds. At 300°C an unknown crystalline ammonium titanium(III) phosphate compound, denoted as Ti(III)p, is formed from the melt as illustrated by the respective XRD pattern in Fig. 2a. The product is a pyrophosphate as evidenced by Raman spectroscopy (Fig. 3). Increasing the reaction temperature to 500 °C yields known titanium(III) trimetaphosphate, Ti(PO₃)₃ (Figure 2c). In this structure the isolated TiO₆ octahedra are linked through infinite chains of PO₄ tetrahedra.

### Synthesis of Ti(III)p at 300 °C

The synthesis of Ti(III)p was performed from a dry mixture of TiO₂ (P 25, Degussa, phase mixture of anatase and rutile, ≥ 99.5%) and NH₄(H₂PO₂) (Fluka, ≥ 97.0%) with a weight ratio of 1/10. The synthesis was tested for batches in a range between 1 g and 10 g without any technical complications or deviations of the product crystallinity and purity. The mixture was filled in a ceramic crucible and heated in a tube furnace at 300 °C for 2 h under Ar flow (100 mL/min). A heating ramp of 10 °C/min was used up to 250 °C which then was decreased to 2 °C/min up to 300 °C. Finally, the sample was cooled down and washed with de-ionized water until pH 6 was achieved in the effluent. The powdery product was dried in air at 80 °C.

Up to 200 °C the compound mixture keeps a powdery form before ammonium hypophosphite starts to melt at 215°C. Partial thermal decomposition of the ammonium hypophosphite into phosphane and ammonium phosphate starts at temperatures above 230°C. Above 245°C the hypophosphite starts to react with titanium oxide as indicated by a deep purple coloration of the melt which is characteristic for the formation of titanium(III) species. Finally, the melt solidifies after the whole ammonium hypophosphite has reacted or decomposed. Both decomposition products were tested for their reactivity with TiO₂ under the relevant reaction conditions and did not show any significant reaction.

The thermal decomposition of ammonium hypophosphite causes the formation of gaseous phosphane (PH₃, CAS: 7803-51-2) which is known as a strong respiratory poison. Therefore, the preparation of TMPs by the presented molten salt method has to be implemented exclusively in closed systems under continuous inert gas flow.

Figure 3 shows a Raman spectrum of Ti(III)p, which reveals a strong signal (764 cm⁻¹) in a range (box) which has been identified to be characteristic for inorganic pyrophosphate compounds.

### Synthesis of Ti(IV)p at 500 °C

Ti(III)p obtained via the synthetic procedure described above was filled in a ceramic crucible and thermally treated at 500 °C under Ar flow (100 mL/min) for 4 h using a heating rate of 10 °C/min. Finally, the resulting white-yellowish powder was washed with de-ionized water and dried in air at 80 °C for 12 h. The phase transformation was tested for batches ranging from 100 mg to 1 g without any deviations of the product crystallinity and purity.

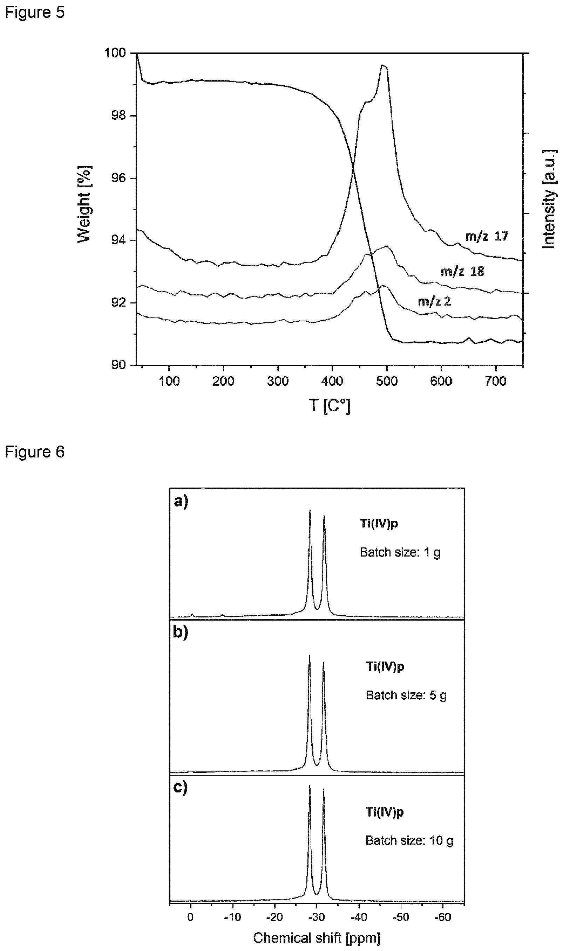

TG (thermogravimetry)/DSC (differential scanning calorimetry) performed under Argon atmosphere with a heating rate of 10 °C/min reveals a single step mass loss between 300 and 500 °C. The mass loss of 7wt% is accompanied by two endothermic signals (Figure 4) indicating the release of ammonia, hydrogen and water during the phase transformation (Figure 5). Due to the high thermal stability of Ti(IV)p, no further transformations occur. The thermal decomposition of the ammonium cation causes the release of ammonia, while the protons are reduced to hydrogen during the oxidation of Ti(III) to Ti(IV) as illustrated in Figure 5.

Figure 6 shows ³¹P MAS NMR spectra of three Ti(IV)p samples, which were prepared via phase transformation from the presented Ti(III)p compound phase. The Ti(III)p compound material was synthesized in different batches of 1 g, 5 g and 10 g (Figure 6 a-c). The signals around -30 ppm can be attributed to the pyrophosphate units of the crystalline Ti(IV)p samples. Spectra a) and b) show two small signals between 0 and - 10 ppm which are characteristic for free ortho- and pyrophosphates which are not part of the crystal structure. The ³¹P MAS NMR spectra of Ti(IV)p show no additional phases and low amounts of amorphous parts, which indicates also a good purity of the Ti(III)p compound material. Upscaling without losses in crystallinity and a high purity are features of the presented molten salt method.

### Synthesis of Ti(PO₃)₃ at 500 °C

The procedure used for the synthesis of Ti(PO₃)₃ is similar to that described for Ti(III)P with a difference in heating rate and temperature. A mixture of TiO₂ (P 25, Degussa) and NH₄(H₂PO₂) (Fluka, ≥ 97.0%) with a weight ratio of 1/10 was filled in a ceramic crucible and heated in a tube furnace at 500 °C for 2 h under Ar flow (100 mL/min) using a heating rate of 10 °C/min. Finally, the sample was cooled down and washed with de-ionized water until pH 6 was achieved. The powdery product was dried at 80 °C in air. The synthesis was tested for batches ranging from 1 g to 5 g without any technical complications or deviations of the product crystallinity and purity.

### Influence of the Amount of Hypophosphite

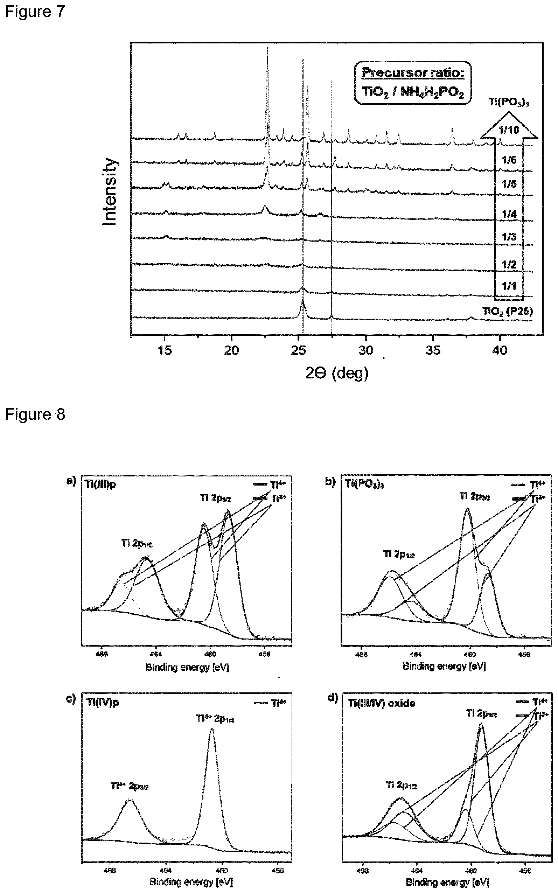

The formation of a melt by using an excess of hypophosphite is beneficial for complete conversion of the TiO₂ and high crystallinity of the product. Syntheses of Ti(PO₃)₃ with increasing weight ratios of hypophosphite compound result in different phase compositions as documented by the XRD patterns in Figure 7. Lower ratios of the hypophosphite compound (1/1 - 1/2) are apparently not sufficient to convert the TiO₂ quantitatively. However, also these conditions cause partial reduction and the formation of stable titanium(III) oxide species on the surfaces of the titania particles as indicated by the characteristic black coloration and confirmed by XPS spectra (Figure 8d). Unknown intermediate phases are formed by increasing hypophosphite ratios (1/3 - 1/5 in Figure 7) before phase pure Ti(PO₃)₃ is yielded from the melt (ratio ≥ 1/6 in Figure 7). In a proposed redox reaction mechanism, the compounds can be considered as oxygen donor and acceptor pairs. While the hypophosphite acts as oxygen acceptor to form stable phosphate compounds, the metal oxide donates oxygen atoms under reductive conditions. Provided that sufficient hypophosphite is available, all oxygen of the metal oxide will be consumed and the reduced cations are free to form crystalline TMP phases.

### Low-valent titanium (III) phosphates

Reports on low-valent titanium (III) phosphates are rather rare in the prior art, likely due to their strong tendency to oxidize in presence of an oxidant, such as air. XPS spectra show the presence of two different titanium species on the crystal surfaces of Ti(III)p and Ti(PO₃)₃ as shown in Figure 3 a) and b). They can be attributed to Ti(III) and Ti(IV) indicating that the Ti(IV) species exist on the on the crystal surface in both compounds, likely as the result of oxidation of Ti(III) on the surface by ambient air. XPS analysis probes surface-near regions of the particles, thus, the Ti(IV) signal is caused by surface species. Crystalline Ti(PO₃)₃ is known to be a pure Ti(III) compound.

### Thermal stability

The bulk of the novel Ti(III)p compound offers a good thermal and chemical stability as indicated by XRD data. It is longtime-stable in acidic aqueous solution even at elevated temperature (H₃PO₄, pH = 1, 80 °C, 72 h) and also thermally stable in air up to 250 °C. At higher temperature the material undergoes a phase transformation to a known titanium(IV) pyrophosphate (TiP₂O₇). Under non-oxidative conditions, thermal treatment of Ti(III)p yields to another novel crystalline Ti(IV) phosphate, denoted as Ti(IV)p, showing exclusively the Ti(IV) species (Figure 8c). TG-MS monitoring (Figure 4 and Figure 5) reveals that the phase transformations are accompanied by release of ammonia, hydrogen and water. The XRD pattern of the novel Ti(IV)p is presented in Figure 2b. Reproducibility and purity of the novel crystalline diamagnetic Ti(IV)p compound was confirmed by ³¹P MAS NMR spectra (Figure 6) showing no additional crystalline or significant amorphous parts in the product.

### Reaction pathways

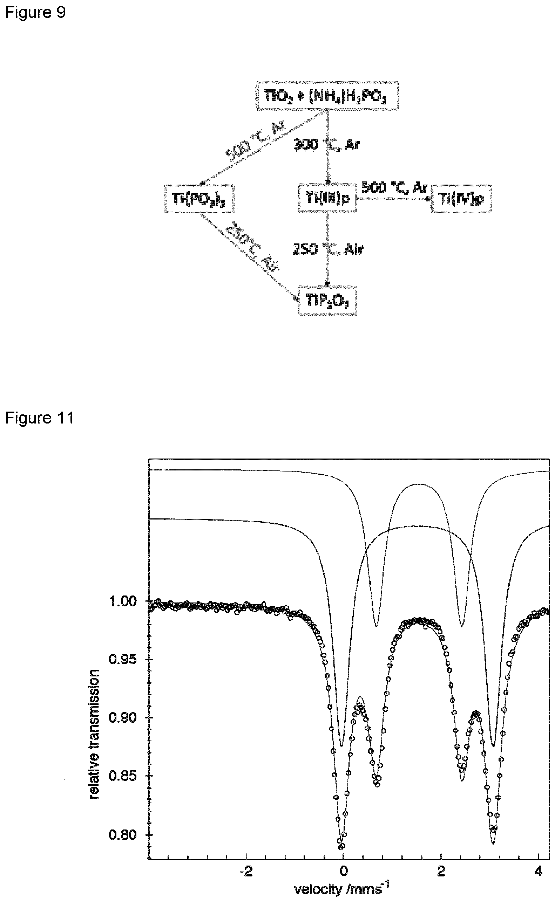

Overall, the conversion of TiO₂ with ammonium hypophosphite offers reaction pathways to several known titanium phosphate compounds as well as two novel phases as sketched in Figure 9. As representative example, the reduction of Ti(IV) to Ti(III) shows the reductive feature and variability of the hypophosphite route.

Formation of low-valent phosphates, as reported here for the titanium compounds, is observed also for other transition metal compounds (see below). In the prior art, low oxidation states of TMPs are generally reported to be accessible by using metal powders or low-valent titanium compounds as compounds. In comparison, the new route offers the possibility to direct the oxidation state of the transition metal via the hypophosphite, which results in quite moderate reaction conditions.

### Synthesis of V(PO₃)₃ at 300 °C

The synthesis of V(PO₃)₃ was performed from a mixture of 0.2 g V₂O₅ (Merck, ≥ 99%) and 2 g NH₄(H₂PO₂) (Fluka, ≥ 97.0%). The mixture was filled in a ceramic crucible and heated in a tube furnace at 300 °C for 2 h under Ar flow (100 mL/min). A heating ramp of 10 °C/min was used up to 250 °C which then was decreased to 2 °C/min up to 300 °C. Finally, the sample was cooled down and washed with de-ionized water until pH 6 was achieved. An additional washing step with ethanol was performed to avoid partial dissolution of the product by residual washing water during the drying process. The powdery product was dried in air at 80 °C.

### Synthesis of V(PO₃)₃ at 500 °C

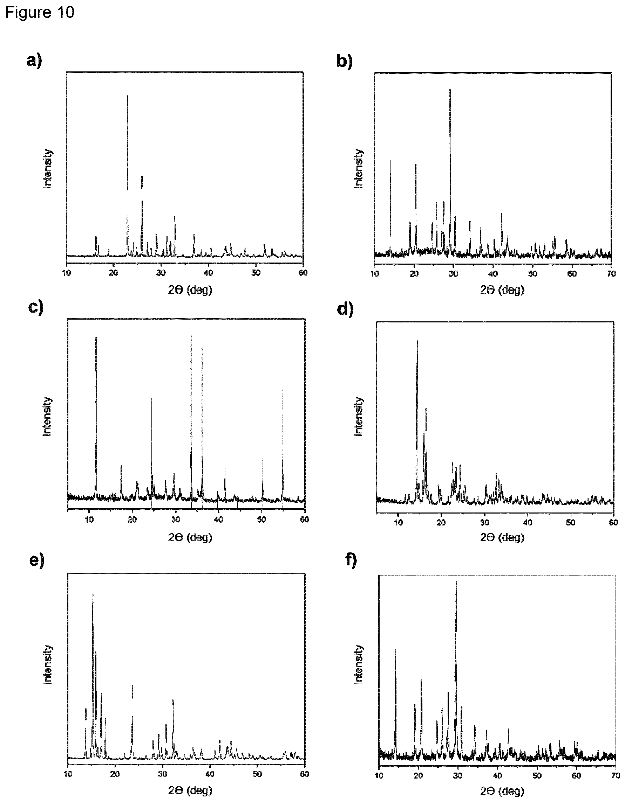

The procedure used for the synthesis of V(PO₃)₃ at 500°C is similar to those described above for 300 °C. The synthesis was performed from a mixture of 1 g V₂O₅ (Merck, ≥ 99%) and 10 g NH₄(H₂PO₂) (Fluka, ≥ 97.0%). The mixture was filled in a ceramic crucible and heated in a tube furnace at 500 °C for 10 h under Ar flow (100 ml/min). A heating ramp of 10 °C/min was used up to 250 °C which then was decreased to 2 °C/min up to 500 °C Finally, the sample was cooled down and washed with de-ionized water until pH 6 was achieved in the effluent. An additional washing step with ethanol was carried out to avoid partial dissolution of the product by residual washing water during the drying process. The powdery product was dried in air at 80 °C. Figure 10a shows the XRD pattern of V(PO₃)₃.

### Synthesis of Cr(NH₄)HP₃O₁₀ at 300 °C

The synthesis of Cr(NH₄)HP₃O₁₀ was performed from a mixture of 0.5 g Cr₂O₃ (Merck, ≥ 98%) and 5 g NH₄(H₂PO₂) (Fluka, ≥ 97.0%). The mixture was filled in a ceramic crucible and heated in a tube furnace at 300 °C for 10 h under Ar flow (100 ml/min). A heating ramp of 10 °C/min was used up to 250 °C which then was decreased to 2 °C/min up to 300 °C. Finally, the sample was cooled down and washed with de-ionized water until pH 6 was achieved in the effluent. An additional washing step with ethanol was carried out to avoid partial dissolution of the product by residual washing water during the drying process. The powdery product was dried at 80 °C in a ventilation oven over night and used for analysis. Figure 10c shows the XRD pattern of Cr(NH₄)HP₃O₁₀ and additional reflections belonging to the Cr₂O₃ compound phase.

### Synthesis of Cr(PO₃)₃ at 500 °C

The synthesis of Cr(PO₃)₃was performed from a mixture of 0.2 g Cr₂O₃ (Merck, ≥ 98%) and 2 g NH₄(H₂PO₂) (Fluka, ≥ 97.0%). The mixture was filled in a ceramic crucible and heated in a tube furnace at 500 °C for 4 h under Ar flow (100 ml/min) with a heating ramp of of 5 °C/min. Finally, the sample was cooled down and washed with de-ionized water until pH 6 was achieved in the effluent. An additional washing step with ethanol was carried out to avoid partial dissolution of the product by residual washing water during the drying process. The powdery product was dried at 80 °C in a ventilation oven over night and used for analysis. Figure 10d shows the XRD pattern of Cr(PO₃)₃ as well as an additional phase which could not be attributed to a known chromium phosphate or oxide phase.

### Synthesis of Mn₂(P₄O₁₂) at 500 °C

The synthesis of Mn₂(P₄O₁₂) was performed from a mixture of 0.2 g MnO₂ (Merck, ≥ 99.0%) and 1 g NH₄(H₂PO₂) (Fluka, ≥ 97.0%). The mixture was filled in a ceramic crucible and heated in a tube furnace at 500 °C for 4 h under Ar flow (100 ml/min) with a heating ramp of of 10 °C/min. Finally, the sample was cooled down and washed with de-ionized water until pH 6 was achieved in the effluent. The powdery product was dried in air at 80 °C. Figure 10b shows the XRD pattern of Mn₂(P₄O₁₂).

### Synthesis of Fe(II)p at 300 °C

The synthesis of the novel Fe(II)p compound was performed from a mixture of 0.5 g Fe₂O₃ (Riedel-de-Haen, ≥ 97%) and 5 g NH₄(H₂PO₂) (Fluka, ≥ 97%). The mixture was filled in a ceramic crucible and heated in a tube furnace at 300 °C for 10 h under Ar flow (100 ml/min). A heating ramp of 10 °C/min was used up to 250 °C which was then decreased to 2 °C/min up to 300 °C. Finally, the sample was cooled down and washed with de-ionized water until pH 6 was achieved in the effluent. The powdery product was dried in air at 80 °C over night. Figure 10e shows the XRD pattern of the novel iron(II) phosphate phase (Fe(II)p).

Figure 11 shows the ⁵⁷Fe Mössbauer spectrum of Fe(II)p. Two different Mössbauer signals with isomer shifts in a range expected for Fe(II) high spin species are illustrated.

While the quadrupole splitting of first component (green line) is similar to that observed in LiFePO₄, the smaller quadrupole splitting of the second component (blue line) is quite small for Fe(II) high spin species. The sharp resonance signals of the spectrum indicate that the sample contains no significant amorphous parts of iron phosphate.

### Synthesis of Fe₂(P₄O₁₂) at 500 °C

The synthesis of Fe₂(P₄O₁₂) was performed from a mixture of 0.2 g Fe₂O₃ (Riedel-de-Haen, ≥ 97%) and 2 g NH₄(H₂PO₂) (Fluka, ≥ 97%). The mixture was filled in a ceramic crucible and heated in a tube furnace at 500 °C for 10 h under Ar flow (100 ml/min) with a heating ramp of of 10 °C/min. Finally, the sample was cooled down and washed with de-ionized water until pH 6 was achieved in the effluent. The powdery product was dried in air at 80 °C over night. Figure 10f shows the XRD pattern of Fe₂(P₄O₁₂).

## Claims

1. Process for preparing a transition metal phosphate comprising
a) preparing a mixture of a particulate transition metal oxide; including lanthanide and actinide oxides, with an at least stoichiometric amount of a particulate hypophosphite compoundor a mixture thereof,
b) heating the mixture obtained in step a), preferably under inert gas conditions, to a temperature range between the melting point and the decomposition temperature of the hypophosphite compound.

2. Process according to claim 1, wherein the heating step b) is carried out up to a temperature in the range between 200 °C and 600 °C.

3. Process according to claim 1 or 2, whereby the heating of step b) is carried out at gradually increasing temperature, preferably in the range between 1 °C/min and 20°C/min.

4. Process according to any one of claims 1 to 3, whereby the heating step is carried out for 30 to 600 minutes, preferably for 90 to 250 minutes.

5. Process according to any one of claims 1 to 4, wherein the process further comprises
- purifying the product obtained in step b), preferably by washing with a solvent, preferably de-ionized or distilled water, and optionally
- drying the obtained product, preferably in air.

6. Process according to any one of claims 1 to 5, wherein the transition metal oxide is preferably a first-row transition metal oxide or alternatively other early transition metal oxides

7. Process according to any one of claims 1 to 6, wherein the hypophosphite compound is (NH₄)H₂PO₂.

8. Process according to any one of claims 1 to 7, wherein the ratio of the weight amount of the hypophosphite compound to the weight amount of the transition metal oxide is in the range of 2:1 to 10:1, preferably 5:1 to 10:1.

9. Transition metal phosphate obtainable from the process according to any one of claims 1 to 8, wherein the metal oxide is selected from Ti, V, Cr, Mn and Fe oxides or mixtures thereof.

10. Titanium(III/IV)phosphate compound obtainable by the process according to any one of claims 1 to 8, wherein TiO₂ is used as transition metal oxide and wherein the heating step b) is carried out up to a temperature of less than 500°C, preferably to a temperature in the range between 250 °C and 350 °C.

11. Use of a Titanium(III/IV)phosphate compound according to claim 10 as a catalyst in organochemical reactions or in electrochemical devices.
